# EUROPÄISCHE PATENTSCHRIFT

(11) **EP 1 255 604 B1**
(45) Veröffentlichungstag und Bekanntmachung des Hinweises auf die Patenterteilung: **05.11.2003**
(21) Anmeldenummer: 00993806.9
(22) Anmeldetag: 25.11.2000
(51) Int. Cl.: B01D 27/06, B01D 27/10, B01D 29/11, B01D 35/30

(54) **FILTEREINSATZ FÜR EIN FLÜSSIGKEITSFILTER**
FILTER ADAPTER FOR A LIQUID FILTER
ELEMENT FILTRANT POUR FILTRE A LIQUIDES

(30) Priorität: 29.01.2000 DE 10003993
(43) Veröffentlichungstag der Anmeldung: 13.11.2002
(73) Patentinhaber: ROBERT BOSCH GMBH, 70442 Stuttgart (DE)
(72) Erfinder: ZORZIN, Luciano, 78256 Steisslingen (DE); LOPEZ, Rafael, E-28033 Madrid (ES); KAEHLER, Juergen, E-28663 Cobena (ES); BAZ, Alfonso, E-28015 Madrid (ES); TORREMOCHA, Eugenio Fernandez, E-28033 Madrid (ES)
(86) Internationale Anmeldenummer: DE0004206
(87) Internationale Veröffentlichungsnummer: WO01054791

(56) Entgegenhaltungen:
- EP-A- 0 023 548
- EP-A- 0 231 862
- EP-A- 0 278 771
- DE-A- 19 634 717
- DE-A- 19 717 324
- DE-A- 19 801 349
- US-A- 4 880 536
- US-A- 5 114 572
- US-A- 5 766 462
- US-A- 5 891 334

## Beschreibung

### Stand der Technik

Die Erfindung geht aus von einem Filtereinsatz für ein Flüssigkeitsfilter nach der im Oberbegriff des Anspruchs 1 näher angegebenen Gattung.

Aus der DE-AS 14 61 451 ist ein solcher Filtereinsatz für ein Flüssigkeitsfilter bekannt, bei dem ein hohlzylindrisch ausgebildetes, radial durchströmtes Filterelement zwischen abdichtenden Endscheiben angeordnet ist. Während die eine Endscheibe geschlossen und aus Kunststoff hergestellt ist, weist die andere, offene Endscheibe einen zentralen Durchgang auf, wobei das Filterelement mit seinen Rändern dicht in der Endscheibe aus Kunststoff befestigt ist. Diese offene Endscheibe ist dabei in eine metallische Grundplatte integriert, die als zentralen Durchgang einen nach außen ragenden rohrförmigen Stutzen aufweist. Zum Zweck der Befestigung des Filtereinsatzes an einem Anschlussmodul weist der rohrförmige Stutzen ein Außengewinde und das Anschlussmodul ein passendes Innengewinde auf. Ferner ist für die innere Abdichtung zwischen Schmutzseite und Reinseite am Stutzen ein zusätzlicher Dichtring angeordnet. Für die Funktionen Befestigung und Abdichtung benötigt der Filtereinsatz somit eine aufwendige Gewindeanordnung und als zusätzliches Bauelement eine Dichtung, wodurch sich der Bauaufwand erhöht. Ungünstig ist ferner, dass die offene Endplatte aus Kunststoff zugleich Teil der Grundplatte ist, die außenliegende Einlaßöffnungen aufweist und ferner einen zusätzlichen Dichtring für die Außenabdichtung trägt, wodurch die Grundplatte selbst einen Teil eines Filtergehäuses bildet. Diese Ausbildung eignet sich schlecht für eine einfache und kostengünstige Bauweise eines Filtereinsatzes.

Ferner ist aus der DE 196 04 371 A1 ein Filtereinsatz bekannt, bei dem die offene Endkappe einen zentralen Durchgang mit einem nach außen ragenden, rohrförmigen Stutzen aufweist. Bei einer Ausführungsform des Filtereinsatzes weist der Stutzen außen eine Ringnut zur Aufnahme eines 0-Rings auf, während eine zweite Ausführungsart im Stutzen ein Innengewinde aufweist. Während im ersten Fall für die innere Abdichtung ein zusätzlicher O-Ring erforderlich ist, weist im zweiten Fall die Endkappe in ihrem Stutzen einen eingespritzten metallischen Gewindering auf, wobei auf die Innenabdichtung nicht näher eingegangen wird. Darüber hinaus sind aber hier keine näheren Angaben zum Einbau des Filtereinsatzes in einem Gehäuse gemacht.

### Vorteile der Erfindung

Der erfindungsgemäße Filtereinsatz für ein Flüssigkeitsfilter mit den kennzeichnenden Merkmalen des Anspruchs 1 hat demgegenüber den Vorteil, dass er eine besonders einfache und kostengünstige Bauweise erlaubt. Das tannenbaumförmige Profil am rohrförmigen Stutzen läßt sich leicht mit herstellen und kann die Funktionen der Befestigung des Filtereinsatzes und der Innenabdichtung gemeinsam erfüllen, so dass hier ein zusätzlicher Dichtring entfällt. Diese Profilausbildung am rohrförmigen Stutzen ermöglicht zudem eine leichte Montage des Filtereinsatzes durch schnelles axiales Einstecken beziehungsweise eine ebensolche Demontage beim Herausziehen. Das tannenbaumartige Profil sorgt für eine gute Innenabdichtung, deren Dichtheit sowohl bei Druckschwellversuchen als auch bei Schockprüfungen standhält. Auch ist diese Innenabdichtung äußerst stabil gegen Temperaturwechsel und ermöglicht zudem eine gute Lagerung des Filtereinsatzes. Durch eine Ausbildung der Endscheiben aus verbrennbarem Kunststoff und des Filterelements aus Papier ergibt sich ein Filtereinsatz, der nach seiner Verschmutzung gut verbrennbar und damit thermisch weiterverwertbar ist.

Durch die in den Unteransprüchen aufgeführten Maßnahmen sind vorteilhafte Weiterbildungen und Verbesserungen des im Anspruch 1 angegebenen Filtereinsatzes möglich. Aus den abhängigen Ansprüchen ergeben sich Ausführungsformen, welche die einfache und kostengünstige Bauweise weiter unterstützen. Besonders vorteilhaft ist eine Ausführungsform bei der der Filtereinsatz auf einfache Weise in einen Flüssigkeitsfilter einsetzbar ist und somit ein zweckmäßiger Einbau in einem Gehäuse an einem Anschlussmodul ermöglicht wird. Weitere vorteilhafte Ausgestaltungen eines solchen Flüssigkeitsfilters mit einem erfindungsgemäßen Filtereinsatz ergeben sich aus weiteren abhängigen Ansprüchen. Zweckmäßig sind ferner Ausbildungen bei denen der Filtereinsatz in einem Leitungsfilter eingebaut wird.

### Zeichnung

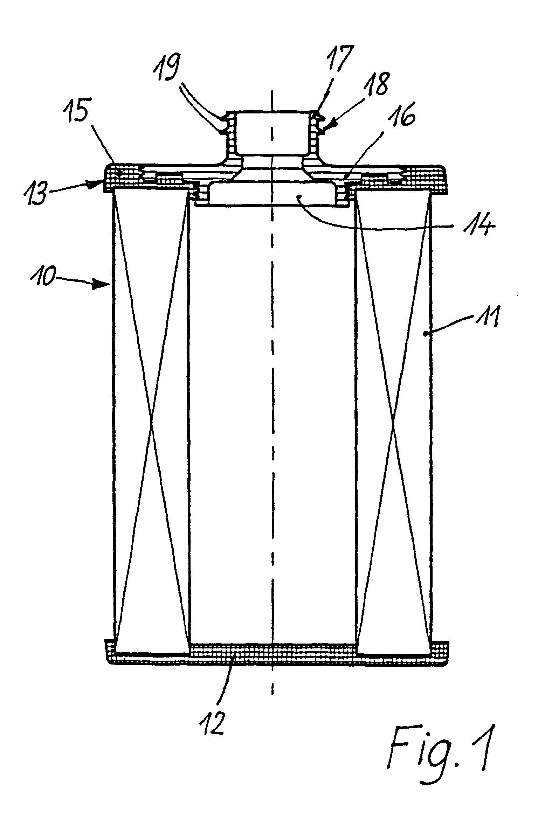

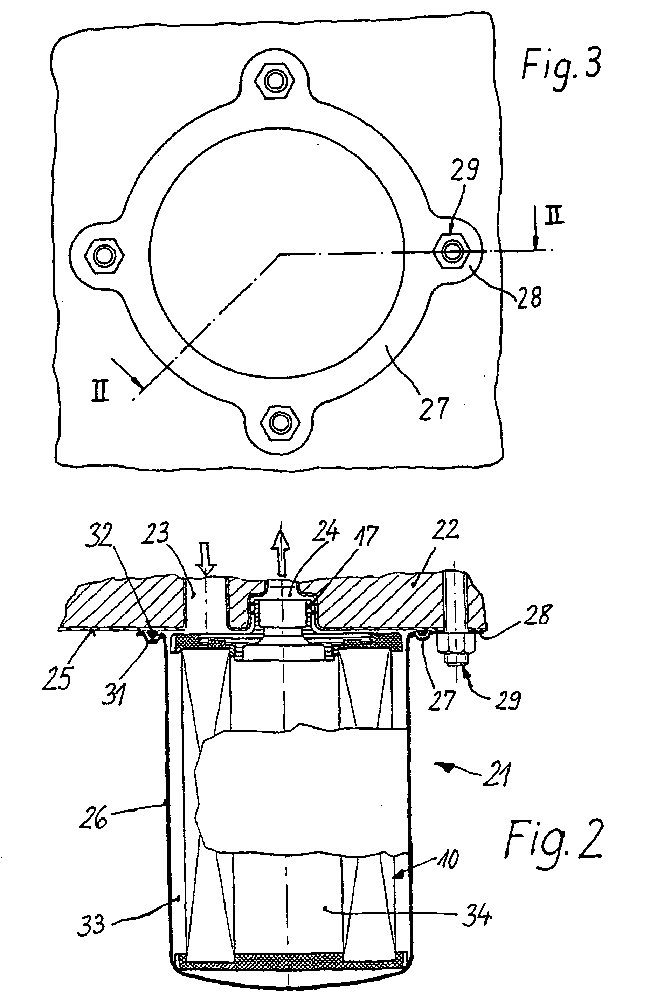

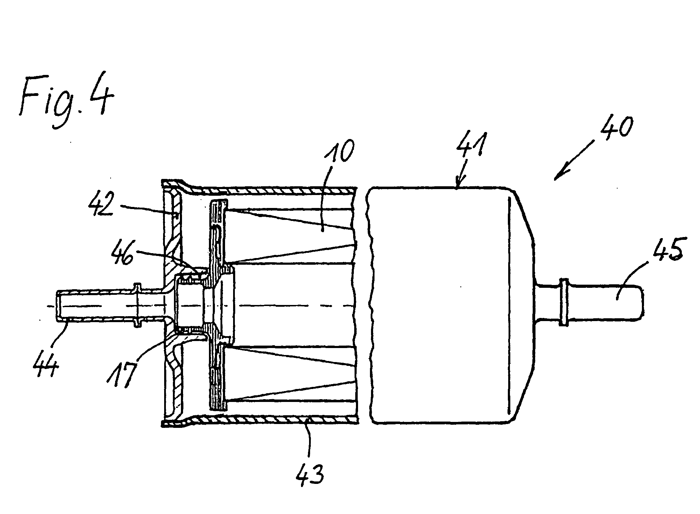

Ausführungsbeispiele der Erfindung sind in der Zeichnung dargestellt und in der nachfolgenden Beschreibung näher erläutert. Es zeigen Figur 1 einen Längsschnitt durch einen Filtereinsatz für ein Flüssigkeitsfilter in vereinfachter Darstellung, Figur 2 den Filtereinsatz nach Figur 1, eingebaut in ein Flüssigkeitsfilter in verkleinertem Maßstab und in vereinfachter Darstellung sowie als Längsschnitt nach II-II in Figur 3 , und Figur 3 eine Untersicht des Flüssigkeitsfilters nach Figur 2; Figur 4 zeigt als teilweisen Längsschnitt den Filtereinsatz in einem Leitungsfilter

### Beschreibung der Ausführungsbeispiele

Die Figur 1 zeigt einen Längsschnitt durch einen Filtereinsatz 10 für ein Flüssigkeitsfilter in vereinfachter Darstellung, wie es bei Kraftstoff-Filtern verwendet wird. Der Filtereinsatz 10 hat ein hohlzylindrisch ausgebildetes Filterelement 11, das aus einem sternförmig gefalteten Filterpapier besteht und dessen zickzackförmig verlaufende Ränder in stirnseitigen Endscheiben 12, 13 aus Kunststoff dicht befestigt sind. Die untere Endscheibe 12 ist geschlossen und als ebene, kreisrunde Platte ausgebildet, während die obere Endscheibe 13 durch einen zentralen Durchgang 14 offen ausgebildet ist. Das sternförmige Filterelement 11 ist somit für eine radiale Durchströmung vorgesehen, wobei dies in der Regel von innen nach außen geschieht. Die sternförmig verlaufenden Ränder an den Stirnseiten des Filterelements 11 sind in die aus Kunststoff bestehenden Endscheiben 12 beziehungsweise 13 eingegossen, so dass eine dichte und feste Verbindung entsteht.

Wie die Figur 1 näher zeigt, ist die offene Endscheibe 13 zweiteilig aufgebaut und besteht aus einem mit dem Filterelement 11 verbundenen Außenring 15 und einem Innenteil 16, das rotationssymmetrisch ausgebildet ist und den zentralen Durchgang 14 aufweist. Das Innenteil 16 hat einen vom Filtereinsatz 10 nach außen ragenden rohrförmigen Stutzen 17, der an seinem Außenumfang ein tannenbaumförmiges Profil 18 aufweist. Dieses Profil ist hier aus zwei ringförmig verlaufenden Rippen 19 gebildet, die im Abstand voneinander verlaufen und nahe zum Ende des Stutzens 17 hin angeordnet sind. Dieses Profil 18 dient nun zwei Funktionen, namlich einmal als Anschlussmittel zum Befestigen des Filtereinsatzes 10 in einem nicht näher gezeichneten Anschlussmodul und ferner als Dichtmittel zur Innenabdichtung im Flüssigkeitsfilter zwischen einer Schmutzseite und einer Reinseite. Das Innenteil 16 ist einfach, stabil und kostengünstig aufgebaut und kann aus dem gleichen Kunststoff hergestellt werden wie der Außenring 15. Vorteilhaft läßt sich dafür ein gegen Kraftstoff widerstandsfähiger Kunststoff, wie zum Beispiel Polyamid, verwenden. Bei der Herstellung des Innenteils 16 aus Kunststoff läßt sich das tannenbaumartige Profil 18 relativ einfach mit anformen.

Die Figur 2 zeigt nun in vereinfachter Darstellung einen Längsschnitt durch ein Flüssigkeitsfilter 21, in dem der Filtereinsatz 10 nach Figur 1 eingebaut ist, wobei der Filtereinsatz 10 in verkleinertem Maßstab dargestellt wird. Das Flüssigkeitsfilter 21 weist ein Anschlussmodul 22 auf, in dem eine erste Anschlussöffnung 23 für den Zulauf sowie eine zweite Anschlussöffnung 24 für den Ablauf ausgebildet sind. Beide Anschlussöffnungen 23, 24 liegen nahe beieinander in einer ebenen Anschlussfläche 25 des Anschlussmoduls 22. Die zweite Anschlussöffnung 24 für den Ablauf ist dabei im Durchmesser und in der Tiefe so ausgebildet, dass sie den Stutzen 17 mit seinem tannenbaumartigen Profil 18 passend aufnehmen kann. Der Filtereinsatz 10 läßt sich durch einfaches axiales Einstecken mit seinem Stutzen 17 in die zweite Anschlussöffnung 24 einfach und schnell montieren. Nach der Montage des Filtereinsatzes 10 am Anschlussmodul 22 übernimmt der Stutzen 17 mit seinen Rippen 19 sowohl eine Haltefunktion als auch eine Dichtfunktion.

Der Filtereinsatz 10 wird anschließend von einem becherförmigen Gehäuse 26 überdeckt, wobei das Gehäuse 26 mit einem an seinem offenen Ende ausgebildeten Ringflansch 27 an der Anschlussfläche 25 anliegt. An dem Ringflansch 27 sind gleichmäßig am Umfang verteilt vier Augen 28 ausgebildet, an denen das Gehäuse 26 mit Hilfe von Schraubverbindungen 29 am Anschlussmodul 22 befestigt wird. Dabei ist im Ringflansch 27 eine Ringnut 31 ausgebildet, die einen zur Außenabdichtung dienenden 0-Ring 32 aufnimmt. Die Anschlussöffnungen 23 und 24 liegen selbstverständlich innerhalb der vom Gehäuse 26 abgedeckten Fläche. Weiterhin ist das Gehäuse 26 in seiner axialen Länge so ausgebildet, dass sich die untere Endscheibe 12 am Gehäuse abstützen kann und somit eine axiale Festlegung des Filtereinsatzes 10 im Gehäuse 26 erfolgt.

Wie die Figur 3, die eine Untersicht des Flüssigkeitsfilters 21 nach Figur 2 darstellt, näher zeigt, werden zu einem Ausbau des verschmutzten Filtereinsatzes 10 die vier Schraubverbindungen 29 gelöst und das Gehäuse 26 abgenommen. Danach läßt sich der verschmutzte Filtereinsatz 10 schnell und einfach durch eine axiale Bewegung herausziehen und kann durch einen neuen Filtereinsatz ersetzt werden. Das Flüssigkeitsfilter 21 mit dem auswechselbaren Filtereinsatz 10 führt somit zu geringen Abfällen, da der Filtereinsatz 10 nur aus verbrennbarem Material besteht, wie Polyamid und Filterpapier, und somit thermisch verwertbar ist.

Wie die Figur 2 in Verbindung mit Figur 3 näher zeigt, ermöglicht die Bauweise des Flüssigkeitsfilters 21 eine einfache und kostengünstige Bauweise des Gehäuses 26. Das Gehäuse 26 kann bei Bedarf in zweckmäßiger Weise aus Metall hergestellt werden, wobei dann die Schraubverbindungen 29 eine einwandfreie, sichere und dichte Befestigung am Anschlussmodul 22 ermöglichen. Dabei übernehmen die Schraubverbindungen 29 auch eine Zentrierfunktion für das Gehäuse 26, so dass der rohrförmige Stutzen 17 in seiner Haltefunktion und seiner Dichtfunktion nicht beeinträchtigt wird. Dabei kann sich der Filtereinsatz 10 am Boden des becherförmigen Gehäuses 26 abstützen, so dass er auch in axialer Richtung festgelegt ist. Ferner ist es bei Bedarf ohne weiteres möglich, das Gehäuse 26 auch aus Kunststoff herzustellen, wobei sich vorteilhaft ein Polyamid mit einer Glasfaserverstärkung bis zu 25% eignet. Bei einem aus Kunststoff hergestellten Gehäuse 26 kann die Befestigung in gleicher Weise über die Schraubverbindungen 29 erfolgen; andererseits ist es möglich, bei einem Kunststoff-Gehäuse 26 in dem Ringflansch 27 geeignete passende Bohrungen vorzusehen, so dass zum Befestigen selbst gewindeschneidende Schrauben verwendbar sind.

Die Wirkungsweise des Flüssigkeitsfilters 21 wird wie folgt erläutert: Der zu reinigende Kraftstoff gelangt über die erste Anschlussöffnung 23 vorbei am Außenumfang der oberen, zweiten Endscheibe 13, auf die Schmutzseite 33 des Flüssigkeitsfilters 21. Der Kraftstoff durchströmt anschließend radial das Filterelement 11 und gelangt gereinigt auf die Reinseite 34. Über den Durchgang 14 kann der gereinigte Kraftstoff zur zweiten Anschlussöffnung 24 im Anschlussmodul 22 abströmen. Die beiden ringförmig verlaufenden Rippen 19 in dem tannenbaumartigen Profil 18 übernehmen dabei neben ihrer Funktion der Halterung auch die Funktion der Abdichtung, so dass ohne ein zusätzliches Bauelement eine Innenabdichtung zwischen Reinseite 34 und Schmutzseite 33 erfolgt.

Die Figur 4 zeigt nun in vereinfachter Darstellung einen teilweisen Längsschnitt durch ein Flüssigkeitsfilter 40, in dem der Filtereinsatz 10 nach Figur 1 eingebaut ist, wobei den Filtereinsatz 10 in verkleinertem Maßstab dargestellt ist. Das Flüssigkeitsfilter 40 ist hier als Leitungsfilter ausgebildet, das ein Gehäuse 41 aus Aluminium hat und bei dem ein Deckel 42 und ein becherförmiges Gehäuseteil 43 dicht und fest miteinander verbunden sind. Die beiden Anschlussstutzen 44 am Deckel 42 und 45 am Gehäuseteil 43 liegen koaxial. Der Deckel 42 übernimmt hier die Funktion des Anschlussmoduls und weist zu diesem Zweck an seiner Innenseite die passende Anschlussöffnung 46 auf, die koaxial zum Anschlussstutzen 44 liegt und in die der Filtereinsatz 10 mit seinem Stutzen 17 gesteckt ist, wobei das tannenbaumförmige Profil 18 sowohl die Funktion der Halterung als auch der Abdichtung übernimmt.

Selbstverständlich sind an den gezeigten Ausführungsformen Änderungen möglich, ohne vom Gedanken der Erfindungsmeldung abzuweichen. Obwohl eine kreisförmige Bauweise des Filtereinsatzes 10 besonders vorteilhaft ist, kann durch die axiale Montage beziehungsweise Demontage des Filtereinsatzes 10 der rohrförmige Stutzen 17 auch eine andere Querschnittsform aufweisen, zum Beispiel quadratisch, rechteckig oder dreieckig oder eine beliebige andere Form, sofern dies für die Einbauverhältnisse zweckmäßig ist. Auch die Anzahl, Form und Ausbildung der Rippen 19 in dem tannenbaumartigen Profil 18 läßt sich im Rahmen der zu erfüllenden Halte- und Dichtfunktion variieren.

Auch die Bauform des Gehäuses 26 und die Befestigungsmittel 29 können geändert werden, ohne vom Gedanken der Erfindung abzuweichen. So lässt sich der Filtereinsatz auch in anderen Gehäusefiltern, Patronen- oder Boxfiltern, Leitungsfiltern und auch in Wegwerffiltern verwenden, zumal er mit weniger Bauelementen auskommt und seine Handhabung einfacher ist. Ferner kann anstelle des in Figur 4 gezeigten Aluminium-Gehäuses auch ein Gehäuse aus Stahlblech oder auch Kunststoff hergestellt werden. Auch können die Gehäuse so ausgebildet werden, dass die Aufnahmeöffnung für den Stutzen des Filtereinsatzes im anderen Gehäuseteil, also z. B. im becherförmigen Gehäuseteil, angeordnet ist.

## Patentansprüche

1. Filtereinsatz für ein Flüssigkeitsfilter für Kraftstoffe, mit einem im wesentlichen hohlzylindrisch ausgebildeten Filterelement, insbesondere aus sternförmig gefalteten Filtermaterial, welches Filterelement dichtend zwischen stirnseitigen Endscheiben angeordnet ist und von der zu filtrierenden Flüssigkeit radial zur Längsachse des Filtereinsatzes durchströmbar ist, wobei die eine erste Endscheibe geschlossen ausgebildet ist, während die andere zweite Endscheibe einen zentralen Durchgang aufweist, der durch einen nach außen ragenden rohrförmigen Stutzen verläuft, an dem Anschlussmittel zum Befestigen des Filtereinsatzes an einem Anschlussmodul sowie Dichtmittel zum inneren Abdichten zwischen einer Schmutz- und eine Reinseite angeordnet sind, **dadurch gekennzeichnet, dass** der Stutzen (17) an seinem Außenumfang ein die Funktionen der Anschlussmittel und der Dichtmittel übernehmendes, tannenbaumartiges Profil (18) mit Rippen (19) aufweist, wodurch der Filtereinsatz (10) mit seinem zentral angeordneten Stutzen (17) in Längsrichtung in eine Anschlussöffnung (24) eines Anschlussmoduls (22) einsteckbar ist.

2. Filtereinsatz nach Anspruch 1, **dadurch gekennzeichnet, dass** die zweite Endscheibe (13) mit dem rohrförmigen Stutzen (17) aus Kunststoff, insbesondere Polyamid, besteht.

3. Filtereinsatz nach Anspruch 1 oder 2, **dadurch gekennzeichnet, dass** die zweite Endscheibe (13) mit dem rohrförmigen Stutzen (17) kreisringförmig ausgebildet ist.

4. Filter nach einem der Ansprüche 1 bis 3, **dadurch gekennzeichnet, dass** die zweite Endscheibe (13) ausschließlich die Innenabdichtung (19) zwischen Schmutz (23) und Reinseite (24) übernimmt.

5. Filtereinsatz nach einem der Ansprüche 1 bis 4, **dadurch gekennzeichnet, dass** die erste Endscheibe (12) aus Kunststoff und das Filterelement (11) aus Filterpapier bestehen.

6. Filtereinsatz nach einem oder mehreren der Ansprüche 1 bis 5, **dadurch gekennzeichnet, dass** die zweite Endscheibe (13) zweigliedrig aufgebaut ist und ein den Stutzen (17) mit dem Profil (18) aufweisendes, ringförmiges Innenteil (16) und einen damit fest verbundenen, das Filtermaterial (11) dicht und fest haltenden Außenring (15) aufweist, die beide aus Kunststoff bestehen.

7. Filtereinsatz nach einem der Ansprüche 1 bis 6, **dadurch gekennzeichnet, dass** er mit seinem rohrförmigen Stutzen (17) in eine zugeordnete Anschlussöffnung (24) des Anschlussmoduls (22) ragt, wobei das Anschlussmodul (22) eine zusätzliche Anschlussöffnung (23) für den Zulauf aufweist und dass der Filtereinsatz (10) sowie die beiden Anschlussöffnungen (23, 24) im Anschlussmodul (22) von einem topfförmigen Gehäuse (26) überdeckt werden, das mit seinem am offenen Ende liegenden Rand (27) am Anschlussmodul (22) dicht befestigt ist.

8. Filtereinsatz nach Anspruch 7, **dadurch gekennzeichnet, dass** sich der Filtereinsatz (10) mit seiner ersten Endkappe (12) innen am Gehäuse (26) abstützt.

9. Filtereinsatz nach einem der Ansprüche 7 und 8, **dadurch gekennzeichnet, dass** das Gehäuse (26) insbesondere durch Schraubverbindungen (29) lösbar am Anschlussmodul (22) befestigt ist, wobei ein eingelegter Dichtring (32) die Abdichtung des Innenraums des Gehäuses (26) nach außen übernimmt.

10. Filtereinrichtung nach einem der Ansprüche 7 bis 9, **dadurch gekennzeichnet, dass** das Anschlussmodul (22) eine im wesentlichen ebene Anbaufläche (25) aufweist, in welche die Anschlussöffnungen (23, 24) münden.

11. Filtereinsatz nach einem der Ansprüche 7 bis 10, **dadurch gekennzeichnet, dass** der Flansch (27) des Gehäuses (26) eine den Dichtring (32) aufnehmende, umlaufende Ringnut (31) aufweist.

12. Filtereinsatz nach einem der Ansprüche 7 bis 11, **dadurch gekennzeichnet, dass** das Gehäuse (26) mit Hilfe mehrerer, längs des Umfangs verteilter Schraubverbindungen (29) am Anschlussmodul (22) befestigt ist, wobei die Schraubverbindungen (29) das Gehäuse (26) relativ zum Anschlussmodul (22) zentrieren.

13. Filtereinsatz nach einem der Ansprüche 1-6, **dadurch gekennzeichnet, dass** er mit seinem rohrförmigen Stutzen (17) in eine zugeordnete Anschlussöffnung (46) des Anschlussmoduls ragt, das als eines der Teile eines zweiteiligen Gehäuses (41) eines Leitungsfilters (40) ausgebildet ist.

14. Filtereinsatz nach Anspruch 13, **dadurch gekennzeichnet, dass** als Anschlussmodul der Deckel (42) des Gehäuses (41) verwendet wird.

15. Filtereinsatz nach Anspruch 13 oder 14, **dadurch gekennzeichnet, dass** die Anschlussstutzen (44, 45) am Deckel (42) und am becherförmigen Gehäuseteil (43) sowie der Stutzen (17) des Filtereinsatzes (10) und dessen zugeordnete Aufnahmeöffnung (46) koaxial zueinander angeordnet sind.

16. Filtereinsatz nach einem der Ansprüche 13-15, **dadurch gekennzeichnet, dass** das Leitungsfilter als Wegwerffilter mit einem aus Kunststoff bestehenden Gehäuse ausgeführt ist.

## Claims

1. Filter insert for a liquid filter for fuels, having a substantially hollow-cylindrical filter element, in particular made from filter material which has been folded into a star shape, which filter element is arranged in a sealed manner between end-side end plates and through which filter element the liquid which is to be filtered can flow in the radial direction with respect to the longitudinal axis of the filter insert, the first end plate being of closed design, while the other, second end plate has a central passage which runs through an outwardly projecting, tubular connection piece, to which connection means for securing the filter insert to a connection module and sealing means for providing an inner seal between a dirty side and a clean side are arranged, **characterized in that** the connection piece (17), on its outer circumference, has a fir-tree profile (18) with ribs (19), which is responsible for the functions of the connection means and the sealing means, with the result that the centrally arranged connection piece (17) of the filter insert (10) can be plugged longitudinally into a connection opening (24) in a connection module (22).

2. Filter insert according to Claim 1, **characterized in that** the second end plate (13) with the tubular connection piece (17) consists of plastic, in particular polyamide.

3. Filter insert according to Claim 1 or 2, **characterized in that** the second end plate (13) with the tubular connection piece (17) is designed in the shape of a circular ring.

4. Filter according to one of Claims 1 to 3, **characterized in that** the second end plate (13) is responsible only for internal sealing (19) between dirty side (23) and clean side (24).

5. Filter insert according to one of Claims 1 to 4, **characterized in that** the first end plate (12) consists of plastic and the filter element (11) consists of filter paper.

6. Filter insert according to one or more of Claims 1 to 5, **characterized in that** the second end plate (13) is of two-part structure, having an annular inner part (16), which includes the connection piece (17) with the profile (18), and an outer ring (15), which is fixedly connected to the inner part and holds the filter material (11) in a fixed and sealed manner, both parts consisting of plastic.

7. Filter insert according to one of Claims 1 to 6, **characterized in that** its tubular connection piece (17) projects into an associated connection opening (24) in the connection module (22), the connection module (22) having an additional connection opening (23) for the feed, and **in that** the filter insert (10) and the two connection openings (23, 24) in the connection module (22) are covered by a pot-shaped housing (26), which is secured in a sealed manner to the connection module (22) by means of its edge (27) which lies at the open end.

8. Filter insert according to Claim 7, **characterized in that** the filter insert (10) is internally supported on the housing (26) by means of its first end cap (12).

9. Filter insert according to one of Claims 7 and 8, **characterized in that** the housing (26) is releasably secured to the connection module (22), in particular by screw connections (29), an inserted sealing ring (32) being responsible for sealing the interior of the housing (26) with respect to the outside.

10. Filter device according to one of Claims 7 to 9, **characterized in that** the connection module (22) has a substantially planar mounting surface (25), into which the connection openings (23, 24) open out.

11. Filter insert according to one of Claims 7 to 10, **characterized in that** the flange (27) of the housing (26) has an encircling annular groove (31) which accommodates the sealing ring (32).

12. Filter insert according to one of Claims 7 to 11, **characterized in that** the housing (26) is secured to the connection module (22) with the aid of a plurality of screw connections (29) which are distributed along the circumference, the screw connections (29) centering the housing (26) relative to the connection module (22).

13. Filter insert according to one of Claims 1-6, **characterized in that** its tubular connection piece (17) projects into an associated connection opening (46) in the connection module, which is designed as one of the parts of a two-part housing (41) of a line filter (40).

14. Filter insert according to Claim 13, **characterized in that** the cover (42) of the housing (41) is used as the connection module.

15. Filter insert according to Claim 13 or 14, **characterized in that** the connection pieces (44, 45) on the cover (42) and on the cup-shaped housing part (43) and the connection piece (17) of the filter insert (10) and its associated receiving opening (46) are arranged coaxially with respect to one another.

16. Filter insert according to one of Claims 13-15, **characterized in that** the line filter is designed as a disposable filter with a housing consisting of plastic.

## Revendications

1. Cartouche filtrante pour filtre à liquides pour carburants, dotée d'un élément filtrant formé principalement par un cylindre creux, notamment en matière filtrante pliée en étoffe, dont l'élément filtrant est disposé hermétiquement entre des flasques d'extrémité sur les faces frontales et au travers duquel le liquide à filtrer peut passer radialement par rapport à l'axe longitudinal de la cartouche filtrante, le premier flasque d'extrémité étant fermé alors que le deuxième présente un passage central qui traverse un manchon tubulaire sortant vers l'extérieur sur lequel sont disposés d'une part des joints de raccordement pour fixer la cartouche filtrante sur un module de jonction et d'autre part des joints d'étanchéité pour procéder à l'étanchéité intérieure entre un côté sale et un côté propre,
**caractérisée en ce que**
le manchon (17) présente à sa périphérie extérieure un profil (18) en forme de sapin prenant en charge les fonctions des joints de raccordement et d'étanchéité ainsi que des nervures (19) permettant à la cartouche filtrante (10) de s'encastrer, avec son manchon (17) centré dans le sens longitudinal, dans une ouverture de raccordement (24) d'un module de raccordement (22).

2. Cartouche filtrante selon la revendication 1,
**caractérisée en ce que**
le deuxième flasque d'extrémité (13) avec le manchon tubulaire (17) est en plastique, notamment en polyamide.

3. Cartouche filtrante selon la revendication 1 ou 2,
**caractérisée en ce que**
le deuxième flasque d'extrémité (13) avec le manchon tubulaire (17) est circulaire.

4. Cartouche filtrante selon l'une des revendications 1 à 3,
**caractérisée en ce que**
le deuxième flasque d'extrémité (13) prend en charge exclusivement l'étanchéité intérieure (19) entre le côté sale (23) et le côté propre (24).

5. Cartouche filtrante selon l'une des revendications 1 à 4,
**caractérisée en ce que**
le première flasque d'extrémité (12) est en plastique et l'élément filtrant (11) est en papier filtre.

6. Cartouche filtrante selon une ou plusieurs des revendications 1 à 5,
**caractérisée en ce que**
le deuxième flasque d'extrémité (13) se divise en deux pièces en plastique : une pièce intérieure (16) circulaire présentant le manchon (17) avec le profil (18) et une autre y étant reliée fixement et présentant une bague extérieure (15) retenant la matière filtrante (11) de façon ferme et hermétique.

7. Cartouche filtrante selon l'une des revendications 1 à 6,
**caractérisée en ce qu'**
elle entre avec son manchon tubulaire (17) dans une ouverture de raccordement (24) rattachée au module de raccordement (22), le module de raccordement (22) présentant une ouverture de raccordement (23) supplémentaire destinée à l'arrivée d'un liquide, et la cartouche filtrante (10) ainsi que les deux ouvertures de raccordement (23, 24) sont recouvertes dans le module de raccordement (22) par un boîtier (26) en forme de pot fixé hermétiquement au module de raccordement (22) avec son bord (27) sur l'extrémité ouverte.

8. Cartouche filtrante selon la revendication 7,
**caractérisée en ce que**
la cartouche filtrante (10) s'appuie à l'intérieur sur le boîtier (26) avec son premier flasque d'extrémité (12).

9. Cartouche filtrante selon l'une des revendications 7 ou 8,
**caractérisée en ce que**
le boîtier (26) est fixé de façon amovible sur le module de raccordement (22), notamment grâce à des raccords à vis (29), une bague d'étanchéité (32) prenant en charge l'étanchéité de l'espace intérieur du boîtier (26) par rapport à l'extérieur.

10. Dispositif de filtrage selon l'une des revendications 7 à 9,
**caractérisé en ce que**
le module de raccordement (22) présente une surface de montage (25) majoritairement plate sur laquelle débouchent les ouvertures de raccordement (23, 24).

11. Cartouche filtrante selon l'une des revendications 7 à 10,
**caractérisée en ce que**
le flanc (27) du boîtier (26) présente une rainure périphérique (31) pour anneau de retenue logeant la bague d'étanchéité (32).

12. Cartouche filtrante selon l'une des revendications 7 à 11,
**caractérisée en ce que**
le boîtier (26) est fixé au module de raccordement (22) à l'aide de plusieurs raccords à vis (29) répartis le long de la périphérie, les raccords à vis (29) centrant le boîtier (26) par rapport au module de raccordement (22).

13. Cartouche filtrante selon l'une des revendications 1 à 6,
**caractérisée en ce qu'**
elle entre avec son manchon tubulaire (17) dans une ouverture de raccordement associée (46) du module de raccordement élaboré en tant qu'une des pièces composant un boîtier en deux parties (41) d'un filtre de conduite (40).

14. Cartouche filtrante selon la revendication 13,
**caractérisée en ce que**
le couvercle (42) du boîtier (41) sert de module de raccordement.

15. Cartouche filtrante selon l'une des revendications 13 ou 14,
**caractérisée en ce que**
les raccords (44, 45) sur le couvercle (42) et sur la pièce du couvercle en forme de coupe (43) ainsi que le manchon (17) de la cartouche filtrante (10) et l'ouverture de logement (46) qui lui est associée sont disposés de manière coaxiale les uns par rapport aux autres.

16. Cartouche filtrante selon l'une des revendications 13 à 15,
**caractérisée en ce que**
le filtre de conduite est réalisé sous forme de filtre jetable avec un boîtier en plastique.
